# EUROPÄISCHE PATENTSCHRIFT

(11) **EP 1 038 118 B1**
(45) Veröffentlichungstag und Bekanntmachung des Hinweises auf die Patenterteilung: **11.06.2003**
(21) Anmeldenummer: 98962414.3
(22) Anmeldetag: 04.12.1998
(51) Int. Cl.: F16D 55/38

(54) **BREMSEINRICHTUNG**
BRAKING DEVICE
DISPOSITIF DE FREINAGE

(30) Priorität: 16.12.1997 DE 19755754; 05.02.1998 DE 19804426
(43) Veröffentlichungstag der Anmeldung: 27.09.2000
(73) Patentinhaber: BPW Bergische Achsen Kommanditgesellschaft, 51674 Wiehl (DE)
(72) Erfinder: HÄUSSLER, Harald, D-71292 Friolzheim (DE); PIETSCH, Helmut, D-71254 Ditzingen (DE); MARTIN, Roland, D-71287 Weissach (DE); MERTENS, Carsten-Jörg, D-71134 Aidlingen (DE); GRUNWALD, Artur, D-51674 Wiehl (DE); PEHLE, Michael, D-51371 Leverkusen (DE); KLAAS, Thomas, D-51580 Reichshof (DE); PITTIUS, Reinhold, D-51674 Wiehl (DE)
(74) Vertreter: Christophersen & Partner
(86) Internationale Anmeldenummer: EP9807895
(87) Internationale Veröffentlichungsnummer: WO99031400

(56) Entgegenhaltungen:
- US-A- 4 605 103

## Beschreibung

Die Erfindung bezieht sich auf eine Bremseinrichtung für Räder von Fahrzeugen, Insbesondere von Fahrzeuganhängern, mit einem Bremssattel und darin geführten Bremsbelägen, zwischen denen mindestens eine bezüglich des Rades drehfeste Bremsscheibe angeordnet ist.

Aus der EP 0 136 434 B1 ist eine Bremse für ein Fahrzeugrad mit einem Schwimmsattel bekannt, welcher mehrere Bremsscheiben und eine Stelleinrichtung mit einer axial verlagerbaren Antriebswelle umfaßt, wobei die Bremsscheiben axial verschiebbar auf einer Verzahnung einer Radnabe gehalten sind. Die Bremseinrichtung nach der EP 0 136 434 B1 wird hier als nächstkommender Stand der Technik angesehen.

Die Aufgabe der Erfindung besteht darin, eine Bremseinrichtung für Räder von Fahrzeugen, insbesondere von Fahrzeuganhängern, zu schaffen, die kompakt und kleinbauend ausgebildet ist und einen optimalen Wirkungsgrad bei einer guten Wartungsfreundlichkeit gewährleistet.

Diese Aufgabe wird erfindungsgemäß gelöst durch eine Bremseinrichtung für Räder von Fahrzeugen, insbesondere von Fahrzeuganhängem, mit einem Bremssattel und darin geführten Bremsbelägen, zwischen denen mindestens eine bezüglich des Rades drehfeste Bremsscheibe angeordnet ist,
wobei der Bremssattel als fahrzeugfest verbundender Festsattel ausgebildet ist und die Bremsscheibe bezüglich des Rades axial verschiebbar ist,
mit einer Stelleinrichtung, die eine Antriebswelle als mechanisches Übertragungselement sowie eine mit der Antriebswelle drehfest verbundene Kugelgewindespindel zur Erzeugung eines Druckes der Bremsbeläge auf die Bremsscheibe aufweist, die vorzugsweise luftdruckbetätigbar ist, wobei die Kugelgewindespindel gemeinsam mit einer darauf angeordneten Kugelgewindemutter einen Kugelgewindetrieb bildet, wobei bei einer Betätigung der Stalleinrichtung jeweils nur einer der beiderseits der Bremsscheibe angeordneten Bremsbeläge eine Zustellbewegung ausführt,
wobei die Antriebswelle und die Kugelgewindespindel der Stelleinrichtung axial unverschiebbar gegenüber dem Achselement und dem Bremssattel angeordnet sind,
und wobei die Kugelgewindemutter Bestandteil eines Joches zur Übertragung einer axialen Bewegung des Kugelgewindetriebs auf mindestens einen gegen einen der Bremsbeläge verfahrbaren Druckstempel ist.

Vorteilhafte Ausgestaltungen der Bremseinrichtung nach Anspruch 1 sind in den Unteransprüchen 2 bis 19 angegeben.

Die mit der Erfindung hauptsächlich erzielten Vorteile bestehen darin, daß der Bremssattel der Einrichtung als Festsattel ausgeführt ist, wodurch ein kleiner Einbauraum benötigt wird und ein gewichtsmäßig leichter und kompakter Bremssattel mit Stelleinrichtung erzielbar Ist. Die Stelleinrichtung kann vorzugsweise mit Luftdruck oder alternativ auch hydraulisch betätigbar sein. Der Bremssattel ist in einfacher Weise mittels eines Befestigungselements am Achsrohr, beispielsweise durch eine Schweißung zu befestigen, wodurch eine zum Ende der Radnabe hin freikragende Anbindung geschaffen wird.

Die am Bremssattel zu befestigende mechanische Stelleinrichtung, wie beispielsweise ein Kugelgewindetrieb bildet mit über ein Joch wirkverbundenen Druckstempeln eine kompakte Baueinheit, die beispielsweise von einem Gehäuse umhüllt und somit vor schädigenden äußeren Einflüssen geschützt ist.

Insbesondere ist die Kugelgewindespindel des Gewindetriebs axial unverschiebbar gegenüber einem Achsschenkel angeordnet, welches sich auf den zu benötigenden Aufnahmeraum vorteilig auswirkt und die Kraftübertragung sowie die Drehlagerung vereinfacht. Eine Demontage bzw. Reparatur der Stelleinrichtung ist in einfacher Weise durch Abnehmen des Gehäuses möglich.

Damit eine gleichmäßige Druckausübung auf die Bremsbeläge der Bremse und eine entsprechende Zustellbewegung beim Bremsvorgang erfolgen kann, ist zu beiden Seiten der Stelleinrichtung, nämlich der Kugelgewindespindel, jeweils mindestens ein Druckstempel vorgesehen. Diese werden in vorteilhafter Weise über das verbindende einteilige Joch mit gleicher Kraft über die Spindel betätigt. Auf das Joch wird über den Kugelgewindetrieb eine axiale Bewegung übertragen und somit auch auf die Druckstempel. Damit in jedem Fall eine axiale Führung der Druckstempel gewährleistet ist, sind diese über innenliegende Führungsbolzen beim Verstellen axial geführt, so daß sich eine ineinander geschachtelte Führung ergibt, die gegen äußere Einflüsse geschützt ist.

Die Abstützung der Spindel erfolgt vorzugsweise in einem Lager einer Lagerplatte des Bremssattels, die ein Widerlager bildet und desweiteren über ein Lager im Gehäusehals, so daß eine Abstützung mit ausreichender Basis gegeben ist. Ebenfalls kann eine Abstützung der Spindel im Hals bzw. am Ausgang des Gehäuses erfolgen, welcher dann das Widerlager bildet, also quasi eine Kraftflußumkehr gegenüber der anderen Ausführung mit der Lagerplatte erzielt wird.

Gleichzeitig ist die Lagerplatte mit seitlichen, abstehenden und abgesetzten Schenkeln versehen. Diese dienen zur Festlegung am Befestigungselement, welches mit der Radachse, beispielsweise durch Schweißen verbunden wird. Hierdurch kann eine einfache Montage bzw. auch eine Demontage von I eilen der Bremseinrichtung, wie beispielsweise eines ein- oder mehrteiligen Bremssattels durchgeführt werden, wobei die Stelleinrichtung, insbesondere die Antriebswelle bzw. die Kugelgewindespindel ebenfalls einfach zu reparieren bzw. zu montieren oder zu demontieren ist. Das ' Befestigungselement schließt vorzugsweise mit der Lagerplatte bündig ab.

Die Kugelgewindespindel liegt vorzugsweise annähernd achsparallel versetzt zu einer Rotationsachse der Bremsscheibe, wodurch sich eine kleinbauende und gut zugängliche Bremseinrichtung ergibt.

Der Bremssattel weist zwischen seiner Lagerplatte und seiner Abstützplatte eine Sattelbrücke mit gegenüberliegenden Führungskanten für die Bremsbeläge auf, wobei diese Führungskanten als Gleitführungen ausgebildet sind. Die zwischen vor und/oder hinter den Bremsbelägen angeordneten Bremsscheiben sind somit beim Bremsvorgang mittels der Druckstempel über die Stelleinrichtung gegen den Bremssattel bzw. gegen die Abstützplatte des Bremssattels verschiebbar. Hierzu sind die Bremsscheiben auf der Radnabe in einer Mitnahmeverzahnung, insbesondere einer Evolventenverzahnung gehalten und auf dieser gleitend verschiebbar.

Die Bremseinrichtung kann eine oder mehrere Bremsscheiben je nach Art und Anwendung umfassen, wobei die Ausbildung der Bremsscheiben als Vollscheiben oder auch als innenbelüftete Bremsscheiben ausgeführt sein können. Entsprechend zu der Anzahl der Bremsscheiben sind die Bremsbeläge ausgeführt.

Die Stelleinrichtung kann in besonderer Weise auch nur einen Druckstempel umfassen, der dann koaxial zur Spindel angeordnet ist. Desweiteren sind auch mehr als zwei Druckstempel möglich, wenn der Bremsbelag eine besondere spezielle Größe aufweist.

Ausführungsbeispiele der Erfindung sind in den Zeichnungen dargestellt und werden im folgenden näher beschrieben.

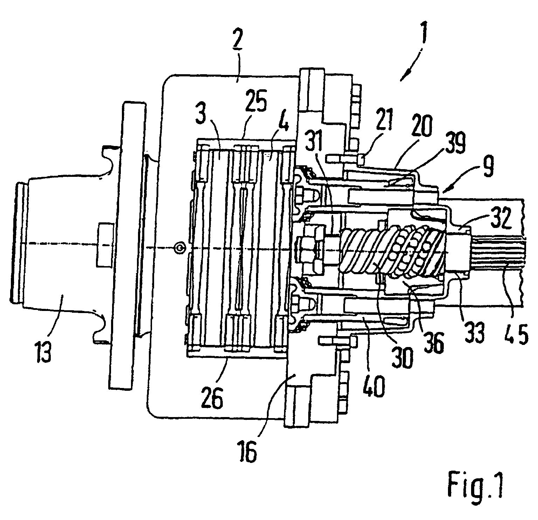

Es zeigen
- Fig. 1: eine Draufsicht auf eine Bremseinrichtung mit Bremssattel, Stelleinrichtung, Bremsscheiben und Bremsbelägen,
- Fig. 2: eine Seitenansicht auf eine Bremseinrichtung gemäß Fig. 1,

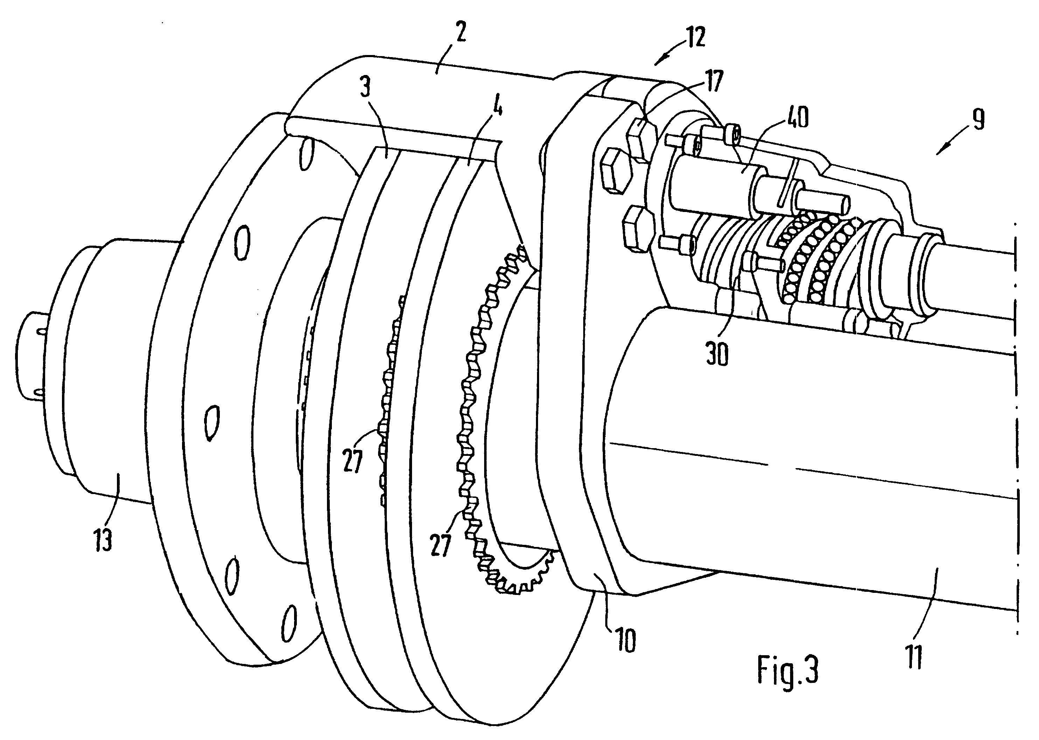

- Fig. 3: eine schaubildliche Darstellung der Bremseinrichtung,

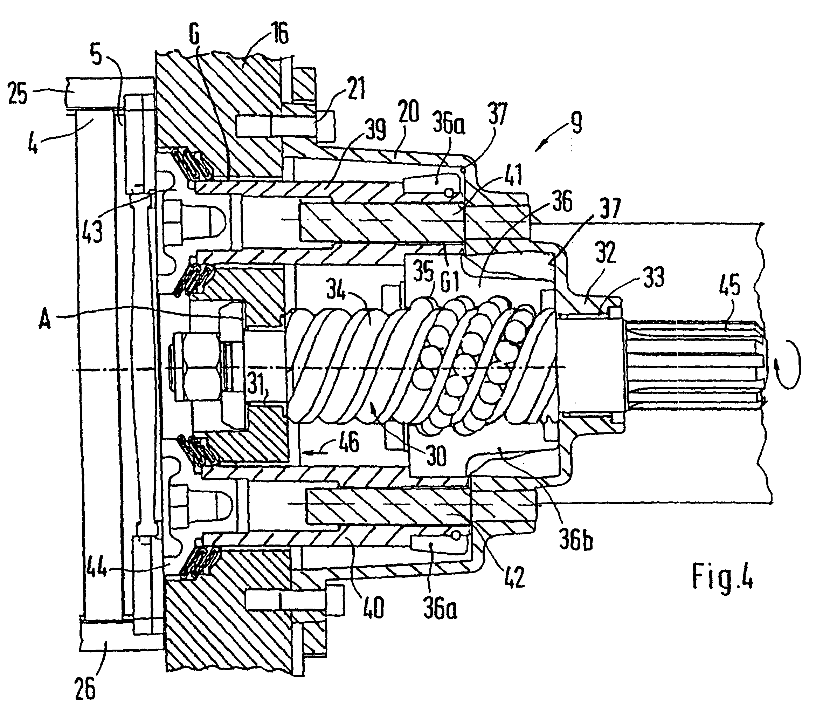

- Fig. 4: eine vergrößerte Darstellung der Stelleinrichtung gemäß Fig. 1 und 2,

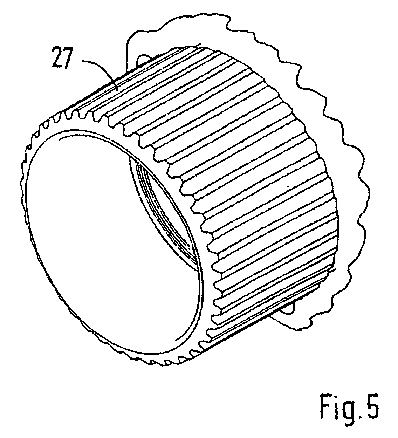

- Fig. 5: eine schaubildliche Darstellung auf eine Mitnahmeverzahnung,
- Fig. 6: eine schaubildliche Darstellung auf den Bremssattel mit Stelleinrichtung,
- Fig. 7: eine Ansicht auf einen Bremsbelag mit seitlichen Führungskanten,
- Fig. 8: eine schaubildliche Ansicht auf eine Abstützplatte des Bremssattels mit Lagerplatte,

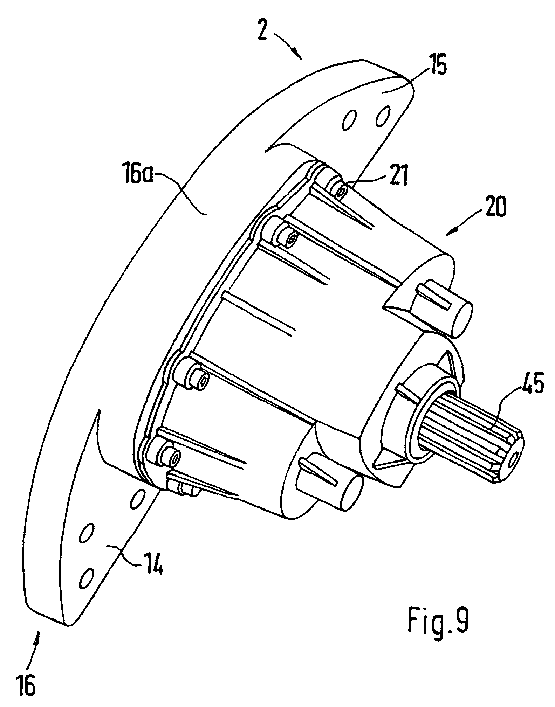

- Fig. 9: eine schaubildliche Darstellung auf die Lagerplatte des Bremssattels mit angeschraubtem Gehäuse für die Stelleinrichtung und
- Fig. 10: eine Schnittdarstellung eines Teils der Bremseinrichtung mit einem Gehäusehals als Widerlager .

Eine Bremseinrichtung 1 für Räder von Fahrzeugen bzw, von Fahrzeuganhängern umfaßt im wesentlichen einen Bremssattel 2, mindestens eine axial verschiebbare Bremsscheibe 3 und 4 und eine entsprechende Anzahl von Bremsbelägen 5 bis 8 und eine Stelleinrichtung 9 zur Bremsenbetätigung. Die Bremseinrichtung 1 ist im Rad angeordnet, wobei ein Teil der Stelleinrichtung aus dem Rad herausragen kann.

Der Bremssattel 2 ist als Festsattel einteilig ausgeführt und über ein Befestigungselement 10 mit einem Achselement, wie beispielsweise einem Achsrohr 11 des Fahrzeugs bzw. des Anhängers an einem vorderen Ende 12 fest verbunden, so daß der Bremssattel 2 zum Ende einer Radnabe 13 hin frei vorkragend gehalten ist.

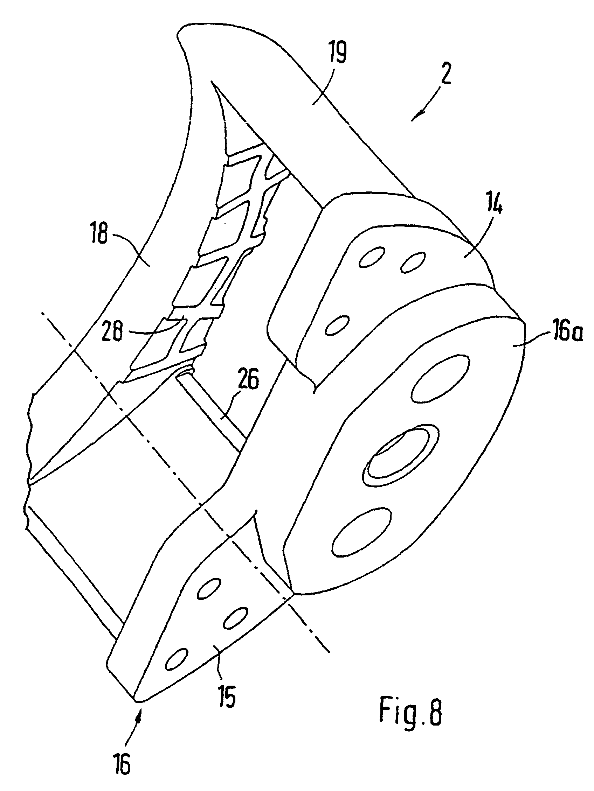

Der Bremssattel 2 weist zur Befestigung mit dem Flansch 10 von einem verdickten Mittenteil 16a in einer Lagerplatte 16 ausgehend zu beiden Seiten abstehende und abgesetzte Schenkel 14 und 15 auf, was in Fig. 8 näher dargestellt ist. Mit dem Befestigungselement 10 ist über Schraubmittel 17 der Bremssattel 2 verbunden, wobei das Element 10 in den Absetzungen der Schenkel 14, 15 angeordnet ist. Das Befestigungselement umgreift das Achsrohr 11 und ist beispielsweise über eine Schweißung mit diesem verbunden.

Der Bremssattel 2 weist - in bezug auf das Rad - neben der vorderseitigen Lagerplatte 16 in einem parallelen Abstand dazu eine Abstützplatte 18 auf, wobei diese Platten 16 und 18 über eine Sattelbrücke 19 vorzugsweise einteilig ausgebildet sind. Deweiteren kann auch eine Mehrteiligkeit des Bremssattels 2 vorliegen.

Im Bremssattel 2 sind die Bremsbeläge 5 bis 8 auf Führungskanten 22, 23 an den jeweiligen Belagrückenplatten auf korrespondierenden Führungskanten 25, 26 des Bremssattels 2 gleitend verschiebbar. Die Form der Führungskanten 22, 23 und 25, 26 sind den Erfordernissen entsprechend ausgeführt. In den Zeichnungen sind diese Führungskanten nur schematisch dargestellt.

Die Bremsscheiben 3 und 4 sind jeweils zwischen den Bremsbelägen 5 bis 8 angeordnet und auf einer Radnabe 13 in mindestens einer Mitnahmeverzahnung 27, beispielsweise einer Evolventenverzahnung axial verschiebbar. Eine Abstützung der Bremsbeläge bzw. der Bremsscheiben erfolgt beim Bremsvorgang an der Abstützplatte 18 des Bremssattels 2. Diese kann Rippen 28 und dergleichen Erhebungen an ihrer Innenfläche aufweisen, damit eine optimale Anlage gewährleistet ist.

Mit der Lagerplatte 16 ist ein abgeschlossenes Gehäuse 20 über Schraubmittel 21 verbunden, in dem die Stelleinrichtung 9 zur Bremsenbetätigung geschützt angeordnet und gelagert ist.

Die Stelleinrichtung 9 umfaßt im wesentlichen einen Kugelgewindetrieb mit einer Spindel 30, insbesondere einer Kugelgewindespindel, welche über eine drehbar, aber axial nicht verlagerbar in dem Gehäuse 20 angeordnete Antriebswelle 45 in Drehung versetzt wird. Die Betätigung der Antriebswelle kann pneumatisch, hydraulisch oder in anderer Weise erfolgen. Diese Einrichtung ist nicht näher dargestellt. Zu dem Kugelgewinde bzw. den Kugelbahnen 34 der Spindel 30 ist korrespondierend ein Kugelgewinde 35 in dem einteiligen Joch 36 angeordnet, das sich in seiner Endlage an einer Stirnfläche 37 des Gehäuses 20 anlegt. Die Kugelgewinde sind über zwischenliegend angeordnete Kugeln zusammenwirkend. Die vorzugsweise einstückig mit der Antriebswelle 45 ausgeführte Kugelgewindespindel 30 ist daher axial unverschiebbar gegenüber dem Achsschenkel 11 angeordnet.

Die Spindel 30 ist in der Lagerplatte 16 des Bremssattels 2 und im Gehäusehals 32 drehbar über jeweils ein Lager 31 und 33 abgestützt, wobei die Lagerplatte 16 ein Widerlager für den Gewindetrieb bildet. Die Druckstempel 39, 40 sind auf Gleitlagern G, die in der Lagerplatte 16 fest angeordnet sind, verschiebbar. Desweiteren sind die Stempel 39, 40 auf Gleitlagern G1, die jeweils in der Hülse der Stempel 39, 40 angeordnet sind, verschiebbar. Die Spindel 30 ist in der Lagerplatte 16 mittels einer Anlaufscheibe A drehbar abgestützt.

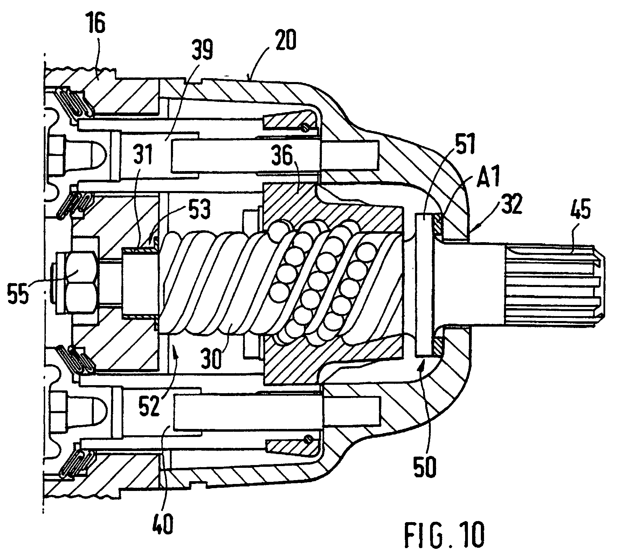

Die Kugelgewindespindel 30 ist nach einer weiteren Ausführung gemäß Fig. 10 mit ihrem der Lagerplatte 16 abkehrten Ende 50 im Gehäusehals 32 des umgebenden Gehäuses 20 gelagert. Dieses Ende 50 der Spindel 30 weist einen innenliegenden Ringflansch 51 auf, der sich über eine Anlaufscheibe A1 stirnseitig des Gehäusehalses 32 abgestützt und dieser ein Widerlager bildet. Das dem Ringflansch 51 abgekehrte andere Ende 52 der Spindel 30 weist eine Absetzung 53 auf, die mittels eines Gleitlagers 31 in einer Bohrung der Lagerplatte 16 gehalten ist. Über eine Sicherungsmutter 55 erfolgt eine Befestigung an der Lagerplatte 16.

Zu beiden Seiten der Spindel 30 ist jeweils ein Druckstempel 39 und 40 angeordnet, die über im Gehäuse 20 gehaltene Bolzen 41, 42 axial verschieblich geführt sind. Endseitig der Druckstempel 39, 40 an ihren dem Bremsbelag 5 zugerichteten Enden, sind Stempelköpfe 43, 44 vorgesehen, die in der Lagerplatte 16 des Bremssattels 2 geführt und gelagert sind.

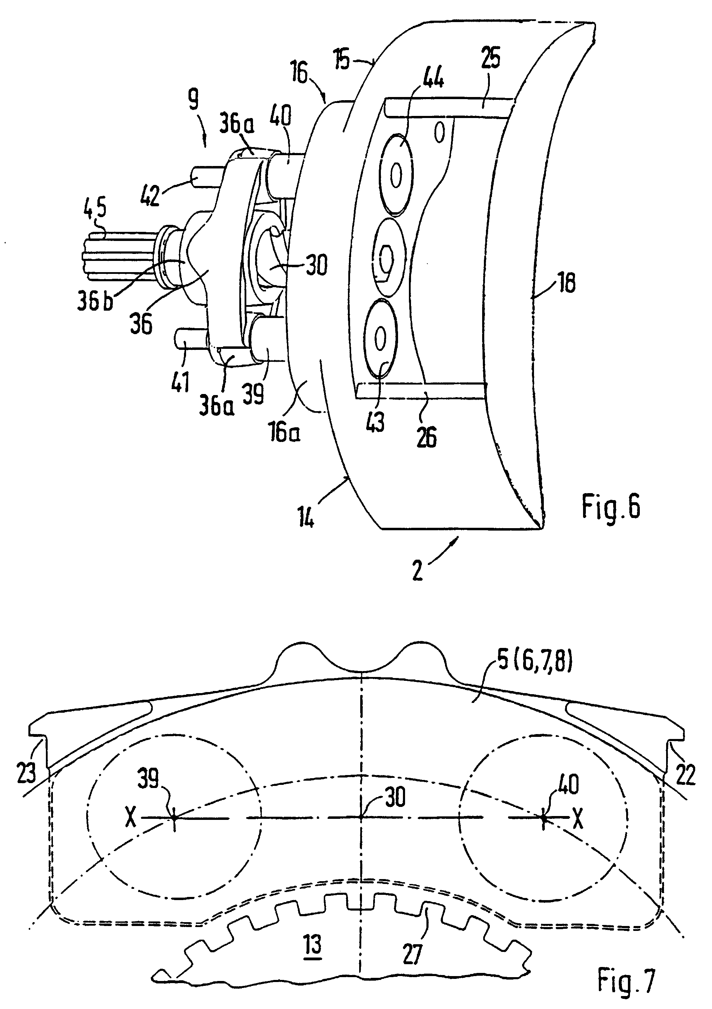

Die Druckstempel 39, 40 sind vorzugsweise in einer Ebene X-X mit der Spindel 30 angeordnet, wobei die Druckkräfte etwa jeweils mittig der Bremsbeläge angreifen, was in Fig. 7 näher dargestellt ist. Desweiteren ist die Kugelgewindespindel 30 annähernd achsparallel versetzt zu einer Rotationsachse R der Bremsscheibe 3, 4 angeordnet.

Es sind im Ausführungsbeispiel zwei Druckstempel 39, 40 gezeigt, was aufgrund der Größe des Bremsbelages erforderlich ist. Denkbar sind auch Ausführungen mit mehr als zwei Druckstempeln oder aber bei relativ kleinen Bremsbelägen kann auch nur ein Druckstempel verwendet werden, der dann beispielsweise koaxial zur Spindel 30 angeordnet sein kann.

Die Druckstempel 39, 40 bestehen vorzugsweise aus einem Hülsenelement, damit eine innere Führung über die Bolzen 41, 42 erfolgen kann. Es sind auch Vollstempel mit einer außenseitigen Führung über Hülsen möglich. Über diese Bolzen 41, 42 erfolgt auch eine Drehmomentabstützung.

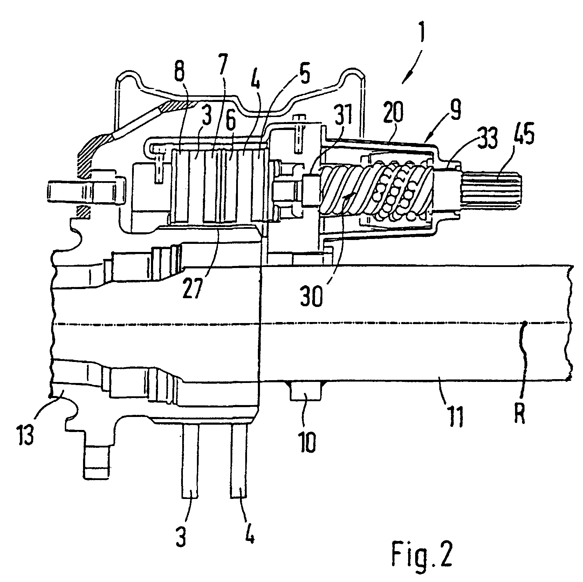

Bei einer Verdrehung der Antriebswelle 45 bzw. der Spindel 30 der Stelleinrichtung 9 dreht sich diese und betätigt über das Joch 36 die Druckstempel 39, 40 und verschiebt diese gemeinsam in Pfeilrichtung 46, so daß die Bremsbeläge die Bremsscheibe 3, 4 gegen die ortsfeste Abstützplatte 18 des Bremssattels 2 und gegen die Bremsbeläge gepreßt werden und ein Bremsvorgang eingeleitet wird. Insbesondere führt der Bremsbelag 5 bei einer Mehrscheibenbremse gemäß Fig. 2 eine Zustellbewegung gegenüber der Bremsscheibe 4 aus und der Bremsbelag 7 eine Zustellbewegung gegenüber der Bremsscheibe 3.

Die Bremsscheiben 3, 4 sind im Ausführungsbeispiel als Vollscheiben ausgebildet. Sie können aber auch als innenbelüftete Bremsscheiben ausgebildet sein oder in Kombination mit Vollscheiben verwendet werden. Die Anzahl der Bremsscheiben ist bei dieser Bremseinrichtung 1 je nach den Erfordernissen zu wählen, wobei auch drei, vier oder mehr Bremsscheiben verwendet werden können.

## Patentansprüche

1. Bremseinrichtung für Räder von Fahrzeugen, insbesondere von Fahrzeuganhängern, mit einem Bremssattel (2) und darin geführten Bremsbelägen (5, 6, 7, 8) zwischen denen mindestens eine bezüglich des Rades drehfeste Bremsscheibe (3, 4) angeordnet ist,
wobei der Bremssattel (2) als fahrzeugfest verbundender Festsattel ausgebildet ist und die Bremsscheibe (3, 4) bezüglich des Rades axial verschiebbar ist,
mit einer Stelleinrichtung (9), die eine Antriebswelle (45) als mechanisches Übertragungselement sowie eine mit der Antriebswelle (45) drehfest verbundene Kugelgewindespindel (30) zur Erzeugung eines Drucks der Bremsbeläge (5, 6, 7, 8) auf die Bremsscheibe (3, 4) aufweist, die vorzugsweise luftdruckbetätigbar ist,
wobei die Kugelgewindespindel (30) gemeinsam mit einer darauf angeordneten Kugelgewindemutter einen Kugelgewindetrieb bildet,
wobei bei einer Betätigung der Stelleinrichtung (9) jeweils nur einer der beiderseits der Bremsscheibe (3, 4) angeordneten Bremsbeläge (7 bzw. 5) eine Zustellbewegung ausführt,
wobei die Antriebswelle (45) und die Kugelgewindespindel (30) der Stelleinrichtung (9) axial unverschiebbar gegenüber dem Achselement (11) und dem Bremssattel (2) angeordnet sind,
und wobei die Kugelgewindemutter Bestandteil eines Joches (36) zur Übertragung einer axialen Bewegung des Kugelgewindetriebs auf mindestens einen gegen einen der Bremsbeläge (5) verfahrbaren Druckstempel (39, 40) ist.

2. Bremseinrichtung nach Anspruch 1, **dadurch gekennzeichnet, daß** das Joch (36) als Kugelgewindemutter zur Übertragung der axialen Bewegung des Kugelgewindetriebs auf die Druckstempel (39, 40) ausgebildet ist.

3. Bremseinrichtung nach einem der vorhergehenden Ansprüche, **dadurch gekennzeichnet, daß** die Stelleinrichtung (9) mindestens zwei Druckstempel (39, 40) umfaßt, die über das Joch (36) mit der Kugelgewindespindel (30) unmittelbar wirkverbunden sind und die einerseits in einem ersten Lager (33) eines Gehäuses (20). und andererseits mit ihrem abgekehrten freien Ende in einem weiteren Lager (31) einer Lagerplatte (16) des Bremssattels (2) drehbar gelagert ist.

4. Bremseinrichtung nach Anspruch 1, **dadurch gekennzeichnet, daß** der Festsattel an einem Ende mittels eines Befestigungselements (10) an einem Achselement (11) befestigt ist und daß an einer Lagerplatte (16) des Festsattels (2) ein Gehäuse (20) für die Lagerung einer ein Kugeigewindetrieb (30, 36) mit der Antriebswelle (45) umfassenden mechanischen Stelleinrichtung (9) befestigt ist und daß an dem Gehäuse (20) sowie an der Lagerplatte (16) die Stelleinrichtung (9) abgestützt ist.

5. Bremseinrichtung nach einem der vorhergehenden Ansprüche, **dadurch gekennzeichnet, daß** die Druckstempel (39, 40) beabstandet zu beiden Seiten der Kugelgewindespindel (30) in einer gemeinsamen Ebene (X-X) mit dieser angeordnet sind.

6. Bremseinrichtung nach einem der vorhergehenden Ansprüche, **dadurch gekennzeichnet, daß** die Kugelgewindespindel (30) annähernd achsparallel versetzt zu einer Rotationsachse (R) der Bremsscheibe (3, 4) angeordnet ist.

7. Bremseinrichtung nach einem der vorhergehenden Ansprüche 4 bis 6, **dadurch gekennzeichnet, daß** Stempelköpfe (43, 44) der Druckstempel (39, 40) in der Lagerplatte (16) des Bremssattels (2) gelagert sind, wobei abgekehrte Enden der Druckstempel (39, 40) mit dem Joch (36) verbunden und jeweils auf im Gehäuse (20) befestigten ortsfesten Führungsbolzen (41, 42) axial verschiebbar gehalten sind.

8. Bremseinrichtung nach einem der vorhergehenden Ansprüche, **dadurch gekennzeichnet, daß** in Hülsen der Druckstempel (39, 40) jeweils Gleitlager (G1) angeordnet sind und weitere Gleitlager (G) für die Stempel (39, 40) jeweils in der Lagerplatte (16) des Bremssattels (2) vorgesehen sind.

9. Bremseinrichtung nach einem der vorhergehenden Ansprüche, **dadurch gekennzeichnet, daß** ein Ende der Spindel (30) über eine Anlaufscheibe (A) in der Lagerplatte (16) des Bremssattels drehbar abgestützt ist und ein Widerlager für die Spindel (30) bildet.

10. Bremseinrichtung nach einem der vorhergehenden Ansprüche, **dadurch gekennzeichnet, daß** die Stelleinrichtung (9) an dem Gehäuse (20) sowie an der Lagerplatte (16) abgestützt ist, wobei eine axiale Abstützung an der Lagerplatte (16) über die Anlaufscheibe (A) an der der Stelleinrichtung (9) abgewandten Seite der Lagerplatte (16) erfolgt.

11. Bremseinrichtung nach einem der vorhergehenden Ansprüche, **dadurch gekennzeichnet, daß** die Kugelgewindespindel (30) mit ihrem der Lagerplatte (16) abgekehrten Antriebsende (50) im Gewindehals (32) des Gehäuses (20) unter Zwischenschaltung einer Anlaufscheibe (A1) abgestützt wird und diese gegenüberstehend zu einem Flanschring (51) der Spindel (30) angeordnet ist und diese Abstützung ein Widerlager im Gehäuse (20) bildet.

12. Bremseinrichtung nach Anspruch 11, **dadurch gekennzeichnet, daß** das andere Ende (52) der Spindel (30) in einem Lager (31) der Lagerplatte (10) axial unverschieblich drehbar gehalten und über eine Sicherungsmutter (55) mit der Lagerplatte (16) verbunden ist.

13. Bremseinrichtung nach einem der vorhergehenden Ansprüche, **dadurch gekennzeichnet, daß** das Joch (36) einteilig ausgeführt ist und in einem verdickten Mittenteil (36b) mit einem Gewinde (34) der Spindel (30) korrespondierend angeordnete Kugelbahnen (35) aufweist und zu beiden Seiten abstehende Schenkel (36a) besitzt, in welchen die Druckstempel (39, 40) fest gehalten sind.

14. Bremseinrichtung nach einem der Ansprüche 4 bis 13, **dadurch gekennzeichnet, daß** die Lagerplatte (16) des Bremssattels (2) Seitenschenkel (14, 15) umfaßt, die mit dem Befestigungselement (10) lösbar verbunden sind und von dem sich der Bremssattel (2) freikragend zum Ende der Radnabe (13) hin erstreckt.

15. Bremseinrichtung nach einem der Ansprüche 4 bis 14, **dadurch gekennzeichnet, daß** die Lagerplatte (16) des Bremssattels (2) in einem parallelen Abstand einer Abstützplatte (18) des Sattels (2) gegenübersteht, welche eine mit Rippen (28) ausgeführte Innenfläche aufweist

16. Bremseinrichtung nach einem der Ansprüche 4 bis 15, **dadurch gekennzeichnet, daß** der Bremssattel (2) zwischen der Lagerplatte (16) und der Abstützplatte (18) eine Sattelbrücke (19) mit gegenüberliegenden Führungskanten (25, 26) für die Bremsbeläge (5 bis 8) aufweist.

17. Bremseinrichtung nach einem der Ansprüche 4 bis 16, **dadurch gekennzeichnet, daß** mindestens eine Bremsscheibe die Bremseinrichtung (1) bildet, welche auf der Radnabe (13) über mindestens eine Mitnahmeverzahnung (27) axial verschiebbar geführt ist und diese als Evolventenverzahnung ausgeführt ist.

18. Bremseinrichtung nach einem der vorhergehenden Ansprüche, **dadurch gekennzeichnet, daß** die Bremsscheibe aus mindestens einer innenbelüfteten Bremsscheibe besteht.

19. Bremseinrichtung nach einem der vorhergehenden Ansprüche, **dadurch gekennzeichnet, daß** der Bremssattel (2) aus einem mehrteiligen Festsattel besteht.

## Claims

1. Braking device for wheels of vehicles; in particular of vehicle trailers, with a brake calliper (2) and with brake linings (5, 6, 7, 8) which are guided in the latter and between which is arranged at least one brake disc (3, 4) fixed in terms of rotation with respect to the wheel, the brake calliper (2) being designed as a fixed calliper connected fixedly with respect to the vehicle, and the brake disc (3, 4) being axially displaceable with respect to the wheel, and with an actuating device (9) which has a drive shaft (45) as a mechanical transmission element and a ball screw (30) connected fixedly in terms of rotation to the drive shaft (45), for generating a pressure of the brake linings (5, 6, 7, 8) on the brake disc (3, 4) which is preferably actuable by air pressure, the ball screw (30) forming, together with a ball nut arranged on it, a ball-screw mechanism, in each case only one of the brake linings (7 or 5) arranged on both sides of the brake disc (3, 4) executing an advancing movement in the event of an actuation of the actuating device (9), the drive shaft (45) and the ball screw (30) of the actuating device (9) being arranged axially non-displaceably with respect to the axle element (11) and to the brake calliper (2), and the ball nut being an integral part of a yoke (36) for the transmission of an axial movement of the ball-screw mechanism to at least one ram (39, 40) moveable towards one of the brake linings (5).

2. Braking device according to Claim 1, **characterized in that** the yoke (36) is designed as a ball nut for the transmission of the axial movement of the ball-screw mechanism to the ram (39, 40).

3. Braking device according to one of the preceding claims, **characterized in that** the actuating device (9) comprises at least two rams (39, 40) which are operatively connected directly to the ball screw (30) via the yoke (36) and which are rotatably mounted, on the one hand, in a first bearing (33) of a housing (20) and, on the other hand, with their free end facing away, in a further bearing (31) of a bearing plate (16) of the brake calliper (2).

4. Braking device according to Claim 1, **characterized in that** the fixed calliper is fastened at one end to an axle element (11) by means of a fastening element (10), and **in that** a housing (20) for the mounting of a mechanical actuating device (9) comprising a ball-screw mechanism (30, 36) together with the drive shaft (45) is fastened to a bearing plate (16) of the fixed calliper (2), and **in that** the actuating device (9) is supported on the housing (20) and on the bearing plate (16).

5. Braking device according to one of the preceding claims, **characterized in that** the rams (39, 40) are arranged at a distance from one another, on both sides of the ball screw (30), in a common plane (X-X) with the latter.

6. Braking device according to one of the preceding claims, **characterized in that** the ball screw (30) is arranged so as to be offset, approximately axially parallel, to an axis of rotation (R) of the brake disc (3, 4).

7. Braking device according to one of the preceding Claims 4 to 6, **characterized in that** ram heads (43, 44) of the rams (39, 40) are mounted in the bearing plate (16) of the brake calliper (2), facing-away ends of the rams (39, 40) being connected to the yoke (36) and being held axially displaceably in each case on fixed guide bolts (41, 42) fastened in the housing (20).

8. Braking device according to one of the preceding claims, **characterized in that** in each case plain bearings (G1) are arranged in sleeves of the rams (39, 40), and further plain bearings (G) for the rams (39, 40) are provided in each case in the bearing plate (16) of the brake calliper (2).

9. Braking device according to one of the preceding claims, **characterized in that** one end of the screw (30) is supported rotatably in the bearing plate (16) of the brake calliper via a thrust washer (A) and forms an abutment for the screw (30).

10. Braking device according to one of the preceding claims, **characterized in that** the actuating device (9) is supported on the housing (20) and on the bearing plate (16), axial support on the bearing plate (16) taking place via the thrust washer (A) on that side of the bearing plate (16) which faces away from the actuating device (9).

11. Braking device according to one of the preceding claims, **characterized in that** the ball screw (30) is supported, with its drive end (50) facing away from the bearing plate (16), in the threaded neck (32) of the housing (20), with a thrust washer (A1) being interposed, the latter is arranged opposite to a flange ring (51) of the screw (30), and this support forms an abutment in the housing (20).

12. Braking device according to Claim 11, **characterized in that** the other end (52) of the screw (30) is held rotatably, and axially non-displaceably, in a bearing (31) of the bearing plate (10) and is connected to the bearing plate (16) via a securing nut (55).

13. Braking device according to one of the preceding claims, **characterized in that** the yoke (36) is produced in one part and has ball tracks (35) arranged, so as to match the screw (30), in a thickened middle part (36b) having a thread (34) and possesses legs (36a) which project on both sides and in which the rams (39, 40) are firmly held.

14. Braking device according to one of Claims 4 to 13, **characterized in that** the bearing plate (16) of the brake calliper (2) comprises side legs (14, 15) which are connected releasably to the fastening element (10) and from which the brake calliper (2) extends, cantilevered, towards the end of the wheel hub (13).

15. Braking device according to one of Claims 4 to 14, **characterized in that** the bearing plate (16) of the brake calliper (2) is located opposite, at a parallel distance from it, a support plate (18) of the calliper (2), the said support plate having an inner face produced with ribs (28).

16. Braking device according to one of Claims 4 to 15, **characterized in that** the brake calliper (2) has, between the bearing plate (16) and the support plate (18), a calliper bridge (19) with guide edges (25, 26) located opposite one another for the brake linings (5 to 8).

17. Braking device according to one of Claims 4 to 16, **characterized in that** the braking device (1) is formed by at least one brake disc which is guided axially displaceably on the wheel hub (13) via at least one drive toothing (27), the latter being designed as an involute toothing.

18. Braking device according to one of the preceding claims, **characterized in that** the brake disc consists of at least one internally ventilated brake disc.

19. Braking device according to one of the preceding claims, **characterized in that** the brake calliper (2) consists of a multi-part fixed calliper.

## Revendications

1. Dispositif de freinage pour roues de véhicules, notamment de remorques de véhicules, comportant un étrier (2) de frein et des garnitures (5, 6, 7, 8) de frein guidées dans ce dernier, entre lesquelles est disposé au moins un disque (3, 4) de frein qui est solidaire en rotation par rapport à la roue,
l'étrier (2) de frein étant agencé sous la forme d'un étrier fixe relié solidairement au véhicule, et le disque (3, 4) de frein pouvant se déplacer axialement par rapport à la roue,
avec un dispositif de réglage (9) comportant un arbre d'entraînement (45) en tant qu'élément de transmission mécanique, ainsi qu'une broche filetée à billes (30) reliée solidairement en rotation à l'arbre d'entraînement (45), destinée à engendrer une pression des garnitures (5, 6, 7, 8) de frein sur le disque (3, 4) de frein, qui peut de préférence être actionné par pression d'air,
la broche filetée à billes (30) formant en commun avec un écrou fileté à billes qui y est disposé un entraînement fileté à billes,
l'une seulement des garnitures (7 ou 5) de frein disposées de part et d'autre du disque (3, 4) de frein effectuant un mouvement d'avance lors d'un actionnement du dispositif de réglage (9),
l'arbre d'entraînement (45) et la broche filetée à billes (30) du dispositif de réglage (9) étant disposés de façon à ne pas pouvoir se déplacer axialement par rapport à l'élément d'essieu (11) et à l'étrier (2) de frein, et
l'écrou fileté à billes faisant partie intégrante d'une culasse (36) destinée à la transmission d'un mouvement axial de l'entraînement fileté à billes à au moins un étançon de pression (39, 40) pouvant se déplacer vers l'une des garnitures (5) de frein.

2. Dispositif de freinage selon la revendication 1, **caractérisé en ce que** la culasse (36) est agencée sous la forme d'un écrou fileté à billes pour la transmission du mouvement axial de l'entraînement fileté à billes aux étançons de pression (39, 40).

3. Dispositif de freinage selon l'une des revendications précédentes, **caractérisé en ce que** le dispositif de réglage (9) comporte au moins deux étançons de pression (39, 40) qui, par l'intermédiaire de la culasse (36), sont en liaison active directe avec la broche filetée à billes (30), cette dernière étant montée en rotation, d'une part dans un premier palier (33) d'un carter (20), et d'autre part dans un autre palier (31) d'une plaque de palier (16) de l'étrier (2) de frein par son extrémité libre opposée.

4. Dispositif de freinage selon la revendication 1, **caractérisé en ce que** l'étrier fixe est fixé sur une extrémité d'un élément d'essieu (11) au moyen d'un élément de fixation (10), **en ce qu'**un carter (20) destiné au logement d'un dispositif de réglage mécanique (9), comportant un entraînement fileté à billes (30, 36) avec l'arbre d'entraînement (45), est fixé sur une plaque de palier (16) de l'étrier fixe (2), et **en ce que** le dispositif de réglage (9) prend appui sur le carter (20) ainsi que sur la plaque de palier (16).

5. Dispositif de freinage selon l'une quelconque des revendications précédentes, **caractérisé en ce que** les étançons de pression (39, 40), espacés des deux côtés de la broche filetée à billes (30), sont disposés avec cette dernière dans un plan commun (X-X).

6. Dispositif de freinage selon l'une quelconque des revendications précédentes, **caractérisé en ce que** la broche filetée à billes (30) est disposée approximativement parallèlement à un axe de rotation (R) du disque (3, 4) de frein en étant décalée par rapport à celui-ci.

7. Dispositif de freinage selon l'une quelconque des revendications précédentes 4 à 6, **caractérisé en ce que** des têtes (43, 44) des étançons de pression (39, 40) sont logées dans la plaque de palier (16) de l'étrier (2) de frein, des extrémités opposées des étançons de pression (39, 40) étant reliées à la culasse (36), et étant retenues de façon à pouvoir se déplacer axialement sur des axes de guidage stationnaires (41, 42) fixés dans le carter (20).

8. Dispositif de freinage selon l'une quelconque des revendications précédentes, **caractérisé en ce que** des paliers lisses (G1) sont respectivement logés dans des manchons des étançons de pression (39, 40), et **en ce que** d'autres paliers lisses (G) pour les étançons (39, 40) sont prévus dans la plaque de palier (16) de l'étrier (2) de frein.

9. Dispositif de freinage selon l'une quelconque des revendications précédentes, **caractérisé en ce qu'**une extrémité de la broche (30) est supportée en rotation dans la plaque de palier (16) de l'étrier de frein par l'intermédiaire d'une rondelle d'arrêt (A), et forme une butée pour la broche (30).

10. Dispositif de freinage selon l'une quelconque des revendications précédentes, **caractérisé en ce que** le dispositif de réglage (9) prend appui sur le carter (20) ainsi que sur la plaque de palier (16), un appui axial sur la plaque de palier (16) étant effectué par l'intermédiaire de la rondelle d'arrêt (A) du côté de la plaque de palier (16) opposé au dispositif de réglage (9).

11. Dispositif de freinage selon l'une quelconque des revendications précédentes, **caractérisé en ce que**, par son extrémité d'entraînement (50) opposée à la plaque de palier (16), la broche filetée à billes (30) est supportée dans le collet fileté (32) du carter (20) par l'intermédiaire d'une rondelle d'arrêt (A1), **en ce que** celle-ci est disposée en face d'une bride annulaire (51) de la broche (30), et **en ce que** ce support constitue une butée dans le carter (20).

12. Dispositif de freinage selon la revendication 11, **caractérisé en ce que** l'autre extrémité (52) de la broche (30) est retenue en rotation dans un palier (31) de la plaque de palier (10) en étant axialement immobile, et est reliée à la plaque de palier (16) par l'intermédiaire d'un écrou indéserrable (55).

13. Dispositif de freinage selon l'une quelconque des revendications précédentes, **caractérisé en ce que** la culasse (36) est réalisée d'un seul tenant, et comporté des chemins de billes (35) correspondant à la broche (30) disposés dans une partie centrale épaissie (36b) munie d'un filetage (34), et des branches (36a) dépassant des deux côtés, dans lesquelles sont retenus les étançons de pression (39, 40).

14. Dispositif de freinage selon l'une quelconque des revendications 4 à 13, **caractérisé en ce que** la plaque de palier (16) de l'étrier (2) de frein comporte des branches latérales (14, 15), qui sont reliées de façon amovible à l'élément de fixation (10), et à partir duquel l'étrier (2) de frein s'étend en faisant librement saillie vers l'extrémité du moyeu (13) de la roue.

15. Dispositif de freinage selon l'une quelconque des revendications 4 à 14, **caractérisé en ce que** la plaque de palier (16) de l'étrier (2) de frein est située à un écartement parallèle en face d'une plaque d'appui (18) de l'étrier (2), laquelle comporte une surface intérieure réalisée avec des nervures (28).

16. Dispositif de freinage selon l'une quelconque des revendications 4 à 15, **caractérisé en ce que**, entre la plaque de palier (16) et la plaque d'appui (18), l'étrier (2) de frein comporte un pont (19) d'étrier avec des bords de guidage (25, 26) opposés pour les garnitures (5 à 8) de frein.

17. Dispositif de freinage selon l'une quelconque des revendications 4 à 16, **caractérisé en ce qu'**au moins un disque de frein constitue le dispositif de freinage (1), lequel est guidé sur le moyeu (13) de la roue de façon à pouvoir se déplacer axialement par l'intermédiaire d'au moins une denture d'entraînement (27), et celle-ci étant réalisée sous la forme d'une denture à développante.

18. Dispositif de freinage selon l'une quelconque des revendications précédentes, **caractérisé en ce que** le disque de frein est constitué d'au moins un disque de frein à ventilation interne.

19. Dispositif de freinage selon l'une quelconque des revendications précédentes, **caractérisé en ce que** l'étrier (2) de frein est constitué d'un étrier fixe en plusieurs parties.
